Europäisches Patentamt

European Patent Office

Office européen des brevets

(11) Veröffentlichungsnummer: **0 084 082**
**B1**

(12) **EUROPÄISCHE PATENTSCHRIFT**

(45) Veröffentlichungstag der Patentschrift :
**11.12.85**

(21) Anmeldenummer : **82108886.1**

(22) Anmeldetag : **25.09.82**

(51) Int. Cl.⁴ : **F 16 K 31/34, F 16 K 47/00,
E 03 D 1/32**

(54) Einlassventil für einen Klosettspülkasten oder ähnliches Flüssigkeitsreservoir.

(30) Priorität : **15.01.82 DE 3201040**

(43) Veröffentlichungstag der Anmeldung :
**27.07.83 Patentblatt 83/30**

(45) Bekanntmachung des Hinweises auf die Patenterteilung : **11.12.85 Patentblatt 85/50**

(84) Benannte Vertragsstaaten :
**FR GB IT**

(56) Entgegenhaltungen :
**EP-A- 0 043 255
DE-U- 7 608 115
GB-A-   861 970
US-A- 2 764 183
US-A- 3 074 684
US-A- 3 763 881
US-A- 4 100 928
US-A- 4 190 206**

(73) Patentinhaber : **IDEAL-STANDARD GMBH
Euskirchener Strasse 80
D-5300 Bonn 1 (DE)**

(72) Erfinder : **Obier, Detlef
Im Haag 3
D-5561 Niederöfflingen (DE)**

**Beschreibung**

Die Erfindung betrifft ein Einlaßventil für einen Klosettspülkasten oder ein ähnliches Flüssigkeitsreservoir, mit einem Funktionsbereich von 0,1 bis 13 bar, wobei eine axial verschiebbare, indirekt betätigbare Verschlußmembran vorgesehen ist, die von einer durch einen Schwimmer betätigbaren Steuer- und Drosselventileinrichtung gesteuert wird, und die durch den Wasserdruck in eine Gegendruckkammer gegen eine Sitzfläche eines in einer Sammelkammer angeordneten Ablaufkörpers hin belastet ist.

Einlaßventile dieser Art sind bekannt. Sie haben den Vorteil, daß nicht der von der Schwimmerstange ausgeübte Schließdruck bei gefülltem Spülkasten die weitere Wasserzufuhr unterbricht, sondern der in der Zuflußleitung vorhandene Druck. Aus dem DE-U-76 08 115 ist bereits ein Einlaßventil der in Rede stehenden Gattung bekannt; bei diesem Einlaßventil ist nachteilig, daß ein Öffnen und Verschließen von dem jeweiligen anfallenden Wasserdruck abhängig ist, d. h., das Ventil schließt aufgrund des jeweiligen Wasserdruckes, entweder bei schwachem Wasserdruck ganz langsam, oder bei ganz hohem Wasserdruck ruckartig und verursacht dadurch hammerschlagartige Schläge; diese Schläge pflanzen sich in den Leitungen fort und verursachen dabei störende Geräusche und gefährden ferner die Leitungen. Ferner ist nachteilig, daß sich die Steueröffnung an der Membran, also in einem Bereich an dem sich der Differenzdruck vor und hinter der Membran, bei geringen Drücken, dem Nullwert nähert und so eine sichere Funktion nicht mehr gewährleistet ist, befindet.

Nach der US-A-3 763 881 ist eine Steuernadel ortsfest angeordnet und ein Steuerkörper bewegt sich zusammen mit der Verschlußmembran, wobei eine zusätzliche Steueröffnung vom Schwimmer betätigt wird. Hierbei ist insbesondere nachteilig, daß die Steuerventileinrichtung konstruktiv relativ aufwendig ist und die gleichen Funktionsprobleme mit sich bringt wie Ventileinrichtungen nach dem DE-U 76 08 115.

Die Aufgabe der Erfindung bestand daher darin, ein Einlaßventil für einen Klosettspülkasten oder dergl. Flüssigkeitsreservoir vorzusehen, welches die vorstehend genannten Nachteile beseitigt, um insbesondere sogenannte Wasserschläge und ferner Verstopfungen im wesentlichen zu vermeiden.

Erfindungsgemäß wird diese Aufgabe dadurch gelöst, daß die Steuer- und Drosselventileinrichtung aus einem in der Sammelkammer angeordneten Steuerventil besteht, dessen Steuerkörper unbeweglich angeordnet ist, und dessen Steuer- und Drosselnadel vom Schwimmer für eine Steuerung und Drosselung des jeweiligen Wasserein- und auslaufs betätigt wird, und daß das Steuerventil über einen Steuerkanal mit der Gegendruckkammer verbunden ist.

Vorteilhafterweise besteht der Steuerkörper aus weichelastischem Werkstoff und ist mit einem Steuerwulst zur Aufnahme einer Steuernadel sowie mit einer Wasserkammer und einem Wasserkanal zum Weiterleiten des Wassers an den Steuerkanal ausgestattet.

Der Steuerkörper ist zweckmäßigerweise mit Dichtlippen, die eine Wassereinlaßöffnung bilden ausgestattet, dabei können die Innenflächen der Dichtrippen strukturiert sein und die Dichtlippen an ihren Außenflächen großflächig, zwecks besserer Reaktion der Wassereinlaßöffnung auf den jeweils anfallenden Wasserdruck, ausgebildet sein.

Die Steuer- und Drosselnadel ist vorteilhafterweise mit einer Spitze zum Einstoßen und Öffnen der Wassereinlaßöffnung — wenn der Wasserspiegel den Normalstand übersteigt — ausgestattet.

Zweckmäßigerweise ist der Ablaufkörper mit einem Schmutzfangring und einem Drosselsteg, zwecks Drosselung des Wassers vor dem Eintritt in den Membranraum versehen.

Durch den Ablaufkörper wird der Grundkörper vorteilhafterweise in eine Sammelkammer, eine Drosselkammer und einen Membranraum abgeteilt.

Die Steuer- und Drosselnadel kann auch stumpf sein und mit einem kugelförmigen Teil an einem Schwimmerhebel angelenkt sein.

Der Steuerkörper ist vorteilhafterweise mit einer Führungsbohrung für die Führung der Steuer- und Drosselnadel und mit Ablaufkanälen zum Ablaufen des Wassers aus der Gegendruckkammer ausgestattet.

Zwecks Befestigung bzw. Abdichtung kann der Steuerkörper am Umfang mit Dicht- bzw. Rastrippen versehen sein.

Die Erfindung ist nachfolgend anhand eines Ausführungsbeispiels unter Bezugnahme auf die beigefügten Zeichnungen erläutert.

Figur 1 ist eine teilweise geschnittene Darstellung eines Einlaßventiles;

Figur 2 ist eine Schnittansicht eines Steuerventils;

Figur 3 ist eine teilweise Schnittansicht des Steuerventilkörpers in einer Draufsicht;

Figur 4 ist eine Vorderansicht des Steuerventilkörpers, und

Figur 5 ist eine rückwärtige Ansicht des Steuerventilkörpers.

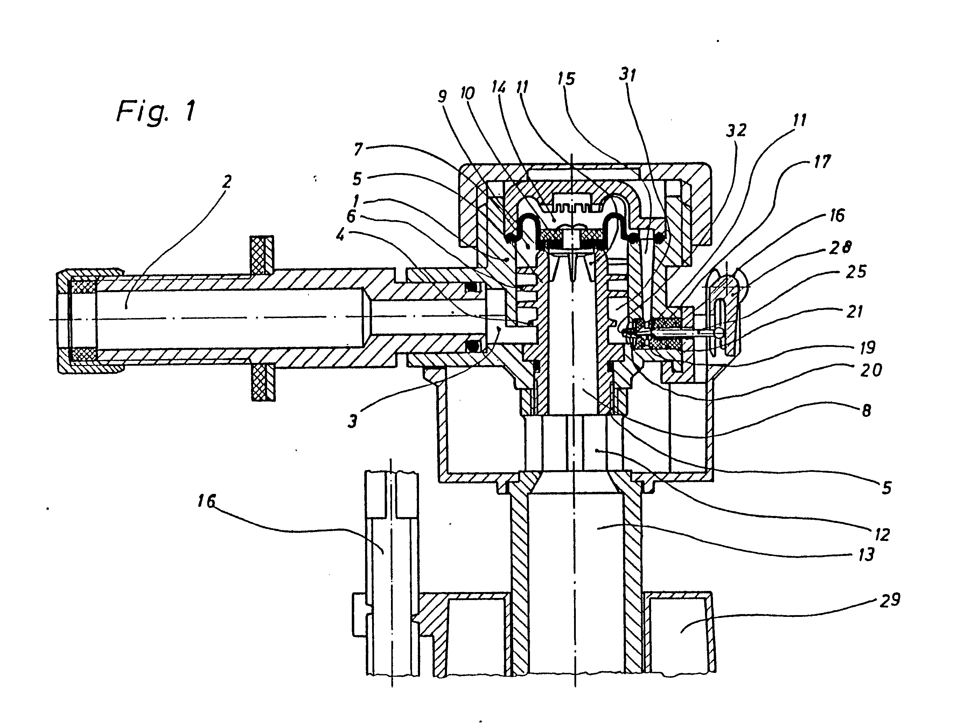

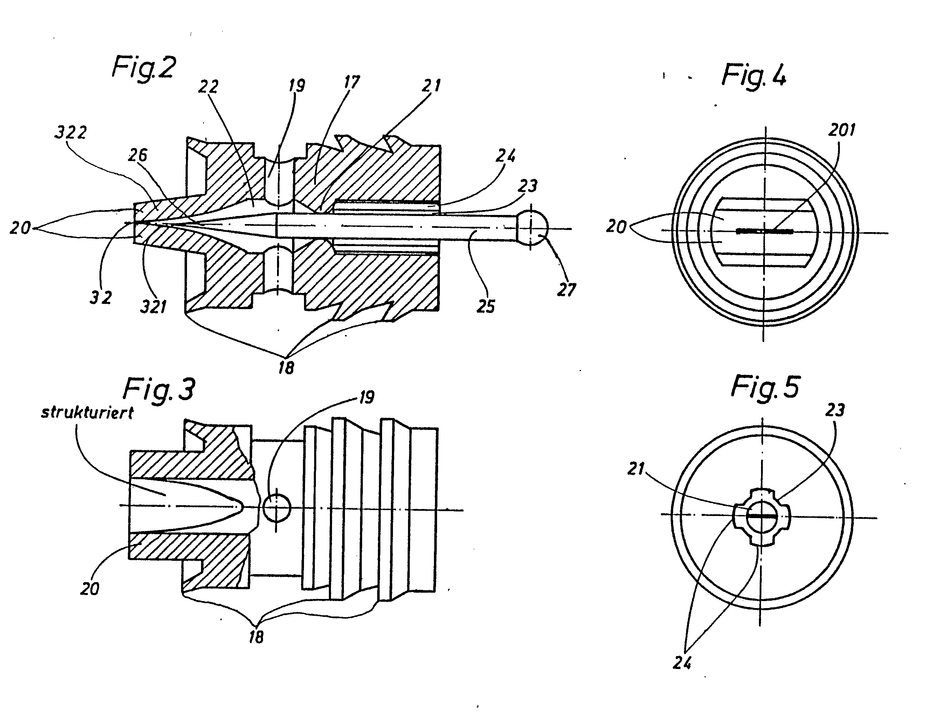

Das in den Fig. 1 bis 5 dargestellte Einlaßventil ist für einen Klosettspülkasten oder dergl. nicht gezeigten Flüssigkeitsreservoir ausgebildet. Dieses Einlaßventil ist für einen Druckbereich von 0,1 bis 13 bar ausgelegt und besteht aus einem Grundkörper 1, an diesen ist ein Wasserzulaufkanal 2 angeschlossen. Der Wasserzulaufkanal 2 mündet in einer Samelkammer 3, an diese schließt sich eine Drosselkammer 31 an.

Die Drosselkammer 31 und die Sammelkammer 3 sind durch einen Schmutzfangring 4 voneinander getrennt ; dieser befindet sich an einem Ablaufkörper 5. Am Umfang des Ablaufkörpers 5 ist ein spiralförmig umlaufender Drosselsteg 6 angeordnet. Durch den Schmutzfangring 4 sollen evtl. im Wasser befindliche Schmutzpartikel, die größer als in etwa 2 mm³ sind, am Eindringen in den spiralförmig umlaufenden Drosselsteg 6 gehindert werden. Durch den Drosselsteg 6 ist eine Drosselung des Wasserdurchlaufes vorgesehen, so daß das Wasser gedrosselt in einen Membranraum 7 gelangen kann. Der Ablaufkörper 5 weist ferner einen Ablaufkanal 8 auf, an dessen oberem Ende befindet sich eine Dichtfläche 9. Oberhalb der Dichtfläche 9 ist eine Membran 10 angeordnet ; diese weist einen Führungskörper 11 auf, durch den die Membran 10 geführt ist. Der Ablaufkanal 8 stellt eine Verbindung zu einer Rücksaugeöffnung 12, und diese wiederum zu einem Ablaufrohr 13 her.

Das Ablaufrohr 13 mündet in einem nicht gezeigten Spülkasten. Über der Membran 10 befindet sich eine Gegendruckkammer 14 ; diese ist mit einem Steuerkanal 15 verbunden, durch den das Wasser zum Schließen bzw. Öffnen der Membran 10 in die Gegendruckammer 14 gelangen kann. Am unteren Ende des Steuerkanales 15, und damit gleichzeitig am Punkt des höchsten Druckes in der Sammelkammer 3 ist ein Steuerventil 16 angeordnet. Das Steuerventil 16 weist einen Steuerkörper 17 auf ; dieser ist am Umfang mit Rastrippen 18 versehen. Der Steuerkörper 17 weist ferner einen Wasserkanal 19 und Dichtlippen 20 auf ; diese Dichtlippen 20 sind auf der Innenfläche strukturiert. Die Dichtlippen 20 bilden eine längliche Wassereinlaßöffnung 32. Der Steuerkörper 17 ist mit einer Steuerkante 21 ausgestattet. Die Steuerkante 21 befindet sich am Ende einer Wasserkammer 22 ; von dieser führt eine Bohrung 23, die wiederum mit Wasserablaufkanälen 24 ausgestattet ist, zu einem nicht gezeigten Spülkasten. In der Bohrung 23 ist eine Steuer- und Drosselnadel 25 angeordnet. Diese Steuernadel 25 weist eine Spitze 26 und eine kugelförmiges Teil 27 auf ; an dieses greift ein Schwimmerhebel 28, der wiederum mit einem Schwimmer 29 verbunden ist. Eine Stellschraube 30 dient zur Einstellung des Schwimmers 29. Wenn nun das Wasser aus dem Spülkasten oder dergl. Flüssigkeits-Reservoir abläuft, bzw. abgelaufen ist, senkt sich mit dem Senken des Wasserspiegels der Schwimmer 29 ebenfalls und nimmt dabei die mit dem Schwimmerhebel 28 verbundene Steuernadel 25 mit. Dabei wird die Steuernadel 25 bis zu ihrer Spitze 26 hinter die Steuerkante 21 gezogen und das in der Gegendruckkammer 14 befindliche Wasser kann über den Steuerkanal 15, den Wasserkanal 19 und weiter durch die Wasserablaufkanäle 24 in den Spülkasten oder dergl. Flüssigkeitsreservoir ablaufen. Da die Gegendruckkammer 14 danach druckentlastet ist, kann sich die Membran 10 von ihrer Sitzfläche 9 abheben und über den Wasserzulaufkanal 2 kann weiteres Wasser nachlaufen, nachdem der Ablaufkanal 8 geöffnet worden ist. Dabei gelangt das Wasser durch den Wasserzulaufkanal zu der Sammelkammer 3 und dann weiter in eine Drosselkammer 31 ; dabei werden evtl. im Wasser befindliche Schmutzpartikel, die größer als 2 mm³ sind, von dem Schmutzfangring 4 zurückgehalten und können daher nicht in den umlaufenden Drosselsteg 6 eindringen. Durch diesen wird das eindringende Wasser gedrosselt und gelangt daher stark gedrosselt in den Membranraum 7 und danach durch den Ablaufkanal 8 zu der Rücksaugöffnung 12 und von dem Ablaufrohr 13 in den nicht gezeigten Spülkasten oder dergl. Flüssigkeitsreservoir. Nach dem Ablauf des Wassers hebt sich der Schwimmer 29 wieder und schiebt über den Schwimmerhebel 28 die Steuernadel 25 wieder in den Steuerwulst 21 und danach kann kein Wasser mehr aus den Wasserablaufkanälen 24 ablaufen. Durch den Wassereinlaßkanal 32, der nur aus einem relativ schmalen Schlitz besteht, und nicht ganz geschlossen ist, kann Wasser hindurchtreten und in die Wasserkammer 22 und von dieser über den Wasserkanal 19 in den Steuerkanal 15 und von diesem in die Gegendruckkammer 14 gelangen. In der Gegendruckkammer 14 baut sich nun ein Druck auf, durch den die Membran 10 wieder auf ihre Sitzfläche gedrückt und der Ablaufkanal 8 dadurch wieder geschlossen wird. Die Dichtlippen 20 sind wie schon gesagt auf ihrer Innenseite 321 strukturiert ; hierdurch soll ein vollständiges Schließen der Wassereinlaßöffnung 32 verhindert werden. Die Dichtlippen 20 sind außen mit relativ großen und langen Wasserandrückflächen 322 versehen. Auf diese Wasserandrückflächen wirkt der jeweils anstehende Wasserdruck und verändert dabei, je nach anstehendem Wasserdruck, die Wassereinlaßöffnung 32. Allerdings wird auch bei höchstem anstehenden Wasserdruck, durch die Strukturierung der Innenseiten 321 verhindert, daß die Wassereinlaßöffnung 32 ganz geschlossen wird. Dadurch wird bewirkt, daß die Membran 10, bei anstehendem maximalen Wasserdruck von ca. 13 bar, und bei einem anstehenden minimalen Wasserdruck von 0,1 bar, immer weich, sanft und geräuscharm auf die Sitzfläche 9 aufsetzt. Eine derartige kleine und schmale Wassereinlaßöffnung 32 neigt nun leicht dazu, zu verschmutzen und dadurch den gesamten Wassereintritt in die Wassereinlaßöffnung 32 zu verhindern ; um dieses zu verhindern ist die Steuernadel 25 mit der Spitze 26 versehen. Wenn nun im Verschmutzungsfalle, der Wasserspiegel höher als normal ansteigt, wird die Steuernadel 25, angetrieben durch den Schwimmer 29, weiter in Richtung der Dichtlippen 20 bewegt und dringt mit ihrer Spitze 26 in die Wassereinlaßöffnung 32 und öffnet und reinigt sie. Danach kann das Wasser wieder durch die Steueröffnung 32 einfließen und der Druck in der Gegendruckkammer 14 wird wieder aufgebaut ; dadurch wird die Membran 20 wieder auf ihre Sitzfläche 9 gezwungen und damit jeder weitere Wasserfluß unterbunden. Die Membran 10 wird durch den Führungskörper 11 axial geführt, um dadurch ein Kippen und verecktes Aufprallen auf die Sitzfläche 9 zu verhindern, welches wiederum zur Geräuschdämpfung beiträgt.

## Patentansprüche

1. Einlaßventil für einen Klosettspülkasten oder ein ähnliches Flüssigkeitsreservoir, mit einem Funktionsbereich von 0,1 bis 13 bar, wobei eine axial verschiebbare, indirekt betätigbare Verschlußmembran (10) vorgesehen ist, die von einer durch einen Schwimmer (29) betätigbaren Steuer- und Drosselventileinrichtung (16) gesteuert wird, und die durch den Wasserdruck in eine Gegendruckkammer (14) gegen eine Sitzfläche eines in einer Sammelkammer (3) angeordneten Ablaufkörpers (5) hin belastet ist, dadurch gekennzeichnet, daß die Steuer- und Drosselventileinrichtung aus einem in der Sammelkammer (3) angeordneten Steuerventil (16) besteht, dessen Steuerkörper (17) unbeweglich angeordnet ist, und dessen Steuer- und Drosselnadel (25) vom Schwimmer (29) für eine Steuerung und Drosselung des jeweiligen Wasserein- und auslaufs betätigt wird, und daß das Steuerventil über einen Steuerkanal (15) mit der Gegendruckkammer (14) verbunden ist.

2. Einlaßventil für einen Spülkasten oder ein ähnliches, Flüssigkeitsreservoir, nach Anspruch 1, dadurch gekenneichnet, daß der Steuerkörper (17) aus weichelastischem Werkstoff besteht und mit einem Steuerwulst (21) zum Abdichten durch die Steuer- und Drosselnadel (25) sowie mit einer Wasserkammer (22) und einem Wasserkanal (19) zum Weiterleiten des Wassers an den Steuerkanal (15) ausgestattet ist.

3. Einlaßventil nach den Ansprüchen 1 und 2, dadurch gekennzeichnet, daß der Steuerkörper (17) mit Dichtlippen (20), die eine Wassereinlaßöffnung (32) bilden, ausgestattet ist.

4. Einlaßventil nach den Ansprüchen 2 bis 3, dadurch gekennzeichnet, daß die Innenseiten (321) der Dichtlippen (20) strukturiert sind und die Dichtlippen (20) an ihrer Außenfläche (322) großflächig, zwecks besserer Reaktion der Wassereinlaßöffnung (32) auf den jeweiligen anfallenden Wasserdruck, ausgebildet sind.

5. Einlaßventil nach den Ansprüchen 1 bis 4, dadurch gekennzeichnet, daß die Steuer- und Drosselnadel (25) mit einer Spitze (26) zum Einstoßen in die Wassereinlaßöffnung (32) — wenn der Wasserspiegel im Spülkasten oder dergl. Flüssigkeitsreservoir den Normal-Stand übersteigt — ausgestattet ist.

6. Einlaßventil nach den Ansprüchen 1 bis 5, dadurch gekennzeichnet, daß der Ablaufkörper (5) mit einem Schmutzfangring (4) und einem Drosselsteg (6), zwecks Drosselung des Wassers vor dem Eintritt in einen Membranraum (7), versehen ist.

7. Einlaßventil nach den Ansprüchen 1 bis 6, dadurch gekennzeichnet, daß durch den Ablaufkörper (5) der Grundkörper (1) in eine Sammelkammer (3) eine Drosselkammer (31) und einen Membranraum (7) abgeteilt wird.

8. Einlaßventil nach den Ansprüchen 1 bis 7, dadurch gekennzeichnet, daß die Steuer- und Drosselnadel (25) stumpf ist und mittels eines kugelförmigen Teiles (27) an einem Schwimmerhebel (28) angelenkt ist.

9. Einlaßventil nach den Ansprüchen 1 bis 8, dadurch gekennzeichnet, daß der Steuerkörper (17) mit einer Führungsbohrung (23) für die Führung der Steuer- und Drosselnadel (25) und mit Ablaufkanälen (23) zum Ablaufen des Wassers aus der Gegendruckkammer (14) ausgestattet ist.

10. Einlaßventil nach den Ansprüchen 1 bis 9, dadurch gekennzeichnet, daß der Steuerkörper (17) am Umfang mit Dicht- bzw. Rastrippen (18) versehen ist.

## Claims

1. Inlet valve for a w.c. flush tank or a similar fluid container, with a functional range of 0.1 to 13 bar, wherein there is provided an axially movable, indirectly actuatable closure diaphragm (10) which is controlled by a control- and throttle valve device (16) actuatable by a float (29), and which is loaded by the water pressure into a counter pressure chamber (14) against a seating of a discharge body (5) arranged in a collecting chamber (3), characterised in that the control- and throttle valve device comprises a control valve (16) arranged in the collecting chamber (3), whose control body (17) is fixedly arranged, and whose control- and throttle needle (25) is actuated by the float (29) for control and throttling of the respective water-inlet and outlet, and in that the control valve is connected to the counter pressure chamber (14) by means of a control channel (15).

2. Inlet valve for a flush tank or similar fluid container, according to claim 1, characterised in that the control body (17) comprises flexible material and is provided with a control rim (21) for sealing by the control- and throttle needle (25), and with a water chamber (22) and a water channel (19) for conveying the water to the control channel (15).

3. Inlet valve according to claims 1 and 2, characterised in that the control body (17) is provided with sealing lips (20) which form a water inlet aperture (32).

4. Inlet valve according to claims 2 to 3, characterised in that the inner sides (321) of the sealing lips (20) are textured, and the sealing lips (20) are constructed to be large in area on their outer surface (322) for a better reaction of the water inlet aperture (32) on the respective prevailing water pressure.

5. Inlet valve according to claims 1 to 4, characterised in that the control- and throttle needle (25) is provided with a point (26) for pushing into the water inlet aperture (32) when the water level in the flush tank or similar fluid container exceeds the normal state.

6. Inlet valve according to claims 1 to 5, characterised in that the drain body (5) is provided with a dirt trapping ring (4) and a throttle cross piece (6), for the purpose of throttling the water before the entry into a diaphragm area (7).

7. Inlet valve according to claims 1 to 6, characterised in that by means of the drain body (5) the basic body (1) is divided into a collecting chamber (3), a throttle chamber (31) and a diaphragm area (7).

8. Inlet valve according to claims 1 to 7, characterised in that the control- and throttle needle (25) is blunt and is pivoted by means of a spherical part (27) on a float lever (28).

9. Inlet valve according to claims 1 to 8, characterised in that the control body (17) is provided with a guide bore (23) for guiding the control- and throttle needle (25), and with drain channels (23) for the discharge of the water from the counter pressure chamber (14).

10. Inlet valve according to claims 1 to 9, characterised in that the control body (17) is provided at the circumference with sealing- or catch ribs (18).

**Revendications**

1. Vanne de remplissage pour un réservoir de liquide tel qu'un réservoir de chasse d'eau sanitaire, prévu pour fonctionner sous une pression d'arrivée d'eau comprise entre 0,1 et 13 bars ; cette vanne comportant une membrane d'obturation (10) à mouvement axial, actionnée indirectement au moyen d'un dispositif de commande et d'étranglement (16) asservi à un flotteur (29) ; cette membrane (10) pouvant ainsi se trouver soumise à la pression de l'eau, qui arrive dans une chambre de contre-pression (14) pour appliquer la membrane contre un siège d'étanchéité (9), prévu à une extrémité d'un canal d'écoulement interne (8), ménagé dans un élément interne (5) de la vanne qui est monté dans une chambre d'arrivée (3) de celle-ci ; la vanne étant caractérisée en ce que le dispositif de commande et d'étranglement (316) est constitué par une soupape de commande (16), communiquant avec la chambre d'arrivée (3) ; cette soupape de commande (16) comportant un corps fixe (17), et une aiguille de commande et d'étranglement (25) qui est actionnée par le flotteur (29), pour commander à chaque fois l'écoulement et l'arrêt de l'eau à l'entrée du réservoir de chasse, avec un effet d'étranglement ; et cette soupape de commande (16) étant reliée par un canal de commande (15) à la chambre de contre-pression (14).

2. Vanne selon la revendication 1, caractérisée en ce que le corps (17) de la soupape de commande (16) est confectionné en une matière élastique et tendre ; le corps (17) comportant un bourrelet de commande (21), qui coopère de manière étanche avec l'aiguille de commande et d'étranglement (25), ainsi qu'une chambre interne (22) pour le passage de l'eau, et un canal (19) pour faire passer l'eau dans le canal de commande (15).

3. Vanne selon l'une des revendications 1 ou 2, caractérisée en ce que le corps (17) de la soupape de commande (16) est pourvu de lèvres d'étanchéité (20) qui déterminent un orifice d'entrée d'eau (32).

4. Vanne selon l'une des revendications 2 ou 3, caractérisée en ce que les faces internes (321) des lèvres d'étanchéité (20) portent des aspérités ; et en ce que les faces externes (322) des lèvres d'étanchéité (20) présentent une surface importante, pour faciliter les variations de la section de passage utile de l'orifice d'entrée d'eau (32), sous l'effet des variations de la pression d'arrivée de l'eau qui agit sur les lèvres précitées.

5. Vanne selon l'une des revendications 1 à 4, caractérisée en ce que l'aiguille de commande et d'étranglement (25) de la soupape de commande (16) comporte une extrémité en pointe (26) prévue pour s'enfoncer dans l'orifice d'entrée d'eau (32), afin d'ouvrir cet orifice lorsque le niveau de l'eau dans le réservoir de chasse monte au-dessus d'une hauteur normale.

6. Vanne selon l'une des revendications 1 à 5, caractérisée en ce que l'élément interne (5) de la vanne qui contient le canal d'écoulement (8) est muni d'une bague de retenue (4) pour arrêter les impuretés, et d'une gorge d'étranglement (6) pour étrangler le débit de l'eau avant l'entrée de la chambre (7) où est montée la membrane (10).

7. Vanne selon l'une des revendications 1 à 6, caractérisée en ce que la cavité interne du corps (1) de la vanne est divisé en trois chambres par l'élément interne d'écoulement (5), à savoir une chambre d'arrivée (3), une chambre d'étranglement (31) et une chambre (7) pour la membrane (10).

8. Vanne selon l'une des revendications 1 à 7, caractérisée en ce que l'aiguille de commande et d'étranglement (25) comporte une extrémité en boule (27), pour assurer une liaison articulée avec un levier de transmission (28) commandé par le flotteur (29).

9. Vanne selon l'une des revendications 1 à 8, caractérisée en ce que le corps (17) de la soupape de commande (16) présente un trou de guidage (23) pour l'aiguille de commande et d'étranglement (25), et des canaux d'écoulement (23) pour la sortie de l'eau provenant de la chambre de contre-pression (14).

10. Vanne selon l'une des revendications 1 à 9, caractérisée en ce que le corps (17) de la soupape de commande (16) est pourvu extérieurement de nervures annulaires d'étanchéité et d'accrochage (18) qui entourent le corps (17) de cette soupape.

Fig. 1

**Fig.2**

22  19  17  21

322
26
24
23
20
32  321
27
18
25

**Fig.4**

201
20

**Fig.3**

strukturiert
19
20
18

**Fig.5**

23
21
24

2

0 084 082